(19) Europäisches Patentamt
European Patent Office
Office européen des brevets

(11) **EP 4 407 006 A1**

(12) **EUROPEAN PATENT APPLICATION**

(43) Date of publication:
**31.07.2024 Bulletin 2024/31**

(21) Application number: **23153587.3**

(22) Date of filing: **27.01.2023**

(51) International Patent Classification (IPC):
*C09D 7/20* (2018.01)          *C09D 135/02* (2006.01)

(52) Cooperative Patent Classification (CPC):
(C-Sets available)
**C09D 135/02; C09D 7/20**          (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Evonik Operations GmbH
45128 Essen (DE)**

(72) Inventors:
• **KERSTEN, Erik
55288 Udenheim (DE)**
• **MÄRZ, Monika
63755 Alzenau (DE)**
• **LEBER, Nadine
55122, Mainz (DE)**
• **HARTMANN, Jürgen
64295 Darmstadt (DE)**
• **SCHARFENBERG, Markus
55118 Mainz (DE)**
• **SCHIEM, Nicolas
64319 Pfungstadt (DE)**

(74) Representative: **Evonik Patent Association
c/o Evonik Industries AG
IP Management
Bau 1042A/PB 15
Paul-Baumann-Straße 1
45772 Marl (DE)**

(54) **HEAT-SEALABLE COATING SYSTEM SUITABLE FOR THE SEALING OF VARIOUS TYPES OF SUBSTRATES**

(57) The present invention is directed to a heat-sealable coating system suitable for the sealing of various types of substrates, comprising a film-forming dispersion, comprising a polyester or polyester mixture as polymer type A, a poly(meth)acrylate as polymer type B, a graft copolymer of polymer type A and polymer type B as polymer type AB, a polyolefin or a polyolefin mixture as polymer type C, and a graft copolymer as polymer type CD, composed of polymer type C and of a poly(meth)acrylate as polymer type D, wherein said dispersion comprises of from 30 % to 60 % by weight of ethyl acetate, and to a process for the sealing of various types of substrates, wherein the foil is coated with a coating system according to the invention.

**(Cont. next page)**

(52) Cooperative Patent Classification (CPC): (Cont.)

C-Sets
**C09D 135/02, C09D 133/06, C09D 151/003,
C09D 151/08**

**Description**

**Field of the invention**

The present invention is directed to a heat-sealable coating system suitable for the sealing of various types of substrates, comprising a film-forming dispersion, comprising a polyester or polyester mixture as polymer type A, a poly(meth)acrylate as polymer type B, a graft copolymer of polymer type A and polymer type B as polymer type AB, a polyolefin or a polyolefin mixture as polymer type C, and a graft copolymer as polymer type CD, composed of polymer type C and of a poly(meth)acrylate as polymer type D, wherein said dispersion comprises of from 30 % to 60 % by weight of ethyl acetate, and to a process for the sealing of various types of substrates, preferably of aluminum foils, polyester foils or PET-coated foil with respect to polystyrene, polyester, and polyvinyl chloride, wherein the foil is coated with a coating system according to the invention.

**Prior art**

Materials used alongside the traditional aluminum lids for closure of plastics containers in food technology, in particular in the case of dairy products, examples being yoghurt pots, are mainly lids made of polyester, in particular of polylactic acid (PLA) or of amorphous polyethylene terephthalate (APET). When these lids are used for closure, they have a sealable coating which at the same time provides the aroma barrier for the food with respect to the foil material.

Sealing of PET foils is usually achieved by means of polyvinyl acetate or polyethylene/polyvinyl acetate, or by means of polyester coatings. These systems do not provide ideal heat-seal seam strength values and are not transparent.

DE-A 35 31 036 describes plastics foils which can be produced by coextrusion which are composed of a seal layer made of impact-resistant polystyrene, a block copolymer, and a lubricant. Again, this system cannot be produced in transparent form, even if the actual APET has very high transparency. It is moreover known that, in relation to the seal seam strength values to be achieved, coextruded foils are less preferred than coated systems in which the coating can undergo a desired microphase separation during drying, because the former provide lower seal seam strength.

However, EP-A 0 406 681 correctly draws attention to the problems with use of heat-sealable plastics foils to replace aluminum foil. A restrictive factor generally apparent is the substantially narrower processing range. There is mostly a very narrow processing range of from 10 °C to 20°C; in order to guarantee problem-free production and fully satisfactory use of the sealed pack, it is necessary to ensure fairly constant compliance with this range. Compliance with this precondition is not always achieved in fill systems which have a plurality of cavities for simultaneous pot filling. EP 0 406 681 addressed the object of inter alia improving the polystyrene-based foils that can be produced by the coextrusion process of DE 35 31 036 in a manner that increases processing range and process reliability. A further intention was to ensure fully satisfactory production in fill systems including those with a plurality of fill cavities. In practice, this results in use of relative high sealing temperatures, with corresponding requirements relating to the quality of the plastics foils. EP 0 406 681 complies with these requirements by using a sealable plastics foil produced by the coextrusion process or by lamination, made of two layers A and C, and optionally of a layer B, and also optionally a respective layer of an adhesion promoter D for the bonding of, in each case, two of the layers A, optionally B, and C, composed of from 1% to 50% of a layer of a heat-sealable, impact-resistant polystyrene A, up to 95% of a supportive layer B, and from 1% to 99% of a high-melting point plastics layer C, where the sum of the thicknesses, or of the weight, of A and optionally B, and C is in each case 100. However, systems of that type are very complicated to realize, and also not transparent.

EP 1 366 128 B1 describes a hot sealing system comprised of an olefin polymer or of an olefin polymer A, of a methacrylate polymer B, of a graft polymer A-X consisting of the above-mentioned constituents and of a solvent or solvent mixture. The hot sealing system is characterized by having a high thermal stability and short sealing times. As solvent mixture a mixture comprising ethyl acetate, iso-octane, and propyl acetate is used.

EP 1 891 174 B1 describes a heat-sealing system consisting of an olefin polymer or olefin copolymer A, a methacrylate copolymer B, a graft polymer AB that is composed of the aforementioned components, a polyester C and an optional polymer D or an optional polymer blend DA, in addition to a solvent or solvent mixture L. The heat-sealing system is characterized by a high heat resistance, excellent barrier properties and short sealing times in relation to various plastics and aluminum foil or PET film. As solvent mixture a mixture comprising ethyl acetate, isooctane, and propyl acetate is used.

EP 1 989 258 B1 describes a heat-sealable coating system suitable for the sealing of various types of substrate and comprising a film-forming dispersion, characterized in that a polymer type A is present and is a polyester or a polyester mixture, a polymer type B is present and is a (meth)acrylate homo- or/and copolymer, containing standard methacrylates and/or standard acrylates, and a polymer type AB is present and is a graft copolymer composed of polymer type A and polymer type B, and if appropriate a polymer type C is present and is an olefin polymer or is an olefin copolymer, and a polymer type CB is present and is a graft polymer composed of polymer type C and polymer type B, and also if appropriate a polymer type D and/or a polymer type DA is present. As solvent mixture a mixture comprising ethyl acetate, iso-octane, and propyl acetate is used.

EP 3 140 360 B1 describes a one-pack binder for heat-seal applications, useful for sealing polyester films, especially polyethylene terephthalate (PET) films, to polystyrene, PVC and polyester receptacles. Said polyesters may in particular be polyethylene terephthalate (PET) or polylactic acid (PLA). The binders here are particularly notable not only for good seal strengths but also for high transparency and excellent application qualities. A key aspect of the invention is the facility to seal without adding adhesion promoters, especially polyester- or polyvinyl chloride (PVC)-based adhesion promoters, while attaining, with respect to PS and PET receptacles, barrier and seal properties that at least match and sometimes exceed those of existing heat-seal systems available on the market. As solvent a mixture comprising cyclohexane and propyl acetate is used.

EP 3 246 370 B1 is directed to a transparent, heat-sealable coating for transparent PET packaging foils can be provided by using a heat-sealable lacquer based on styrene-containing copolymers, on poly(meth)acrylates, on at least one polyester and optionally on a tackifier, and also the process for the sealing of a foil coated with this lacquer. It is surprising here that, despite the use of a rubber based on styrene-containing polymers that is not optically compatible with polyesters and polymethacrylate, the transparency of the heat-sealable coatings is still very high. As solvent propyl acetate or a mixture of propyl acetate and cyclohexane is used.

## Object

To optimize the recycling of food containers and their lids it would be advantageous to use the same material for the container and the lid. Many materials that might be used as container and lid, e. g. polyethylene terephthalate (PET), have the disadvantage that they show relatively low melting temperatures and/or decomposition temperatures, making it impossible to use the heat-sealing coating systems being dried at temperatures well above 100 °C for these materials.

It was therefore an object of the present invention to provide a heat sealable coating system that can be used in heat sealing processes where the drying step is operated at lower temperatures than those known in the art.

Other objects not explicitly mentioned will be apparent from the entirety of the description, claims, and examples below.

## Achievement of objects

Surprisingly the inventors found that this object can be achieved by a heat-sealable coating system suitable for the sealing of various types of substrates, comprising a film-forming dispersion, comprising a polyester or polyester mixture as polymer type A, a poly(meth)acrylate as polymer type B, a graft copolymer of polymer type A and polymer type B as polymer type AB, a polyolefin or a polyolefin mixture as polymer type C, and a graft copolymer as polymer type CD, composed of polymer type C and of a poly(meth)acrylate as polymer type D, wherein said dispersion comprises of from 30 % to 60 % by weight of ethyl acetate

The present invention is therefore directed to heat-sealable coating system suitable for the sealing of various types of substrates, comprising a film-forming dispersion, comprising a polyester or polyester mixture as polymer type A, a poly(meth)acrylate as polymer type B, a graft copolymer of polymer type A and polymer type B as polymer type AB, a polyolefin or a polyolefin mixture as polymer type C, and a graft copolymer as polymer type CD, composed of polymer type C and of a poly(meth)acrylate as polymer type D, wherein said dispersion comprises of from 30 % to 60 % by weight of ethyl acetate.

The present invention is further directed to a process for the sealing of various types of substrates, preferably of aluminum foils, polyester foils or PET-coated foil with respect to polystyrene, polyester, and polyvinyl chloride, wherein the foil is coated with a coating system according to the invention

The use of coating system of the present invention has the advantage that materials can be heat sealed that have a lower decomposition temperature melting temperature than poly styrene (PS) or polyethylene terephthalate PET.

The coating system of the invention can be used to produce peelable (easy-to-peel) sealings, especially sealing polyethylene or polypropylene aluminum foil against polyethylene or polypropylene used in food packaging industry.

The heat-sealing coating system of the invention has the advantage, that it can be used without the need for addition of plasticizer.

The heat-sealing coating system of the invention has the further advantage that it allows drying at low temperatures, preferably below 100 °C.

The low drying temperature makes it possible to run the step of applying the heat-sealing coating system to a foil (or film) and to run the drying step on standard coating equipment having a low drying efficiency. Due to the use of the low boiling solvent, the solvent(s) can be removed completely even at low drying temperatures.

The heat-sealing coating system of the invention has the further advantage that the low boiling solvent (mixture) contains mainly ethyl acetate, which can be recovered easily, for example by distillation.

The products, processes, and uses (methods to use) according to the invention are described by way of example hereinafter, without any intention that the invention be restricted to these illustrative embodiments. When ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified hereinbelow are by weight unless otherwise stated. Where average values are reported hereinafter, these are the numerical average, unless stated otherwise. Where properties of a material are referred to hereinafter, for example viscosities or the like, these are the properties of the material at 25 °C, unless stated otherwise. Where chemical (empirical) formulae are used in the present invention, the specified indices may be not only absolute numbers but also average values.

The heat-sealable coating system according to the invention suitable for the sealing of various types of substrates, comprising a film-forming dispersion, comprises

a polyester or polyester mixture as polymer type A,
a poly(meth)acrylate as polymer type B,
a graft copolymer of polymer type A and polymer type B as polymer type AB,
a polyolefin or a polyolefin mixture as polymer type C, and
a graft copolymer as polymer type CD, composed of polymer type C and of a poly(meth)acrylate as polymer type D, wherein said dispersion comprises of from 30 % to 60 % by weight of ethyl acetate. Preferably the dispersion comprises of from 50 % to 55 % by weight of ethyl acetate. It might be advantageous that said dispersion comprises of from 0.5 % to 10 % by weight, preferably of from 5 % to 7.5 % by weight of cyclohexane.

Ethyl acetate and, if present, cyclohexane, is/are preferably present in the dispersion as solvent and/or liquid phase.

It might further be advantageous if said dispersion comprises of from 0.0001 % to < 0.1 % by weight of calcium stearate based on the total weight of the dispersion

It might even further be advantageous if said dispersion comprises of from 0.0001 % to < 0.1 % by weight of 2,6-di-tert-butyl-p-cresol based on the total weight of the dispersion

Said dispersion of the coating system according to the invention preferably comprises of from 20% to 50% by weight, more preferably 25 % to 40 % by weight of polymer type A,

from 10% to 20% by weight, more preferably 10 % to 15 % by weight of polymer type B,
from 10% to 20% by weight of polymer type AB,
from 5% to 25% by weight, more preferably 10 % to 15 % by weight of polymer type C, and
from 15 to 35% by weight, more preferably 20 % to 30 % by weight of polymer type CD,
based in each case on the total mass of the polymer types A, B, C, AB, and CD.

The proportion of the polymer type C, inclusive of the proportions in polymer type CD, based on the total mass of the polymer types A, B, C, AB, and CD, is preferably of from 5 to 40% by weight, preferably of from 10 to 20 % by weight.

It might be advantageous if a polymer is used as polymer type C where from 1 % to 15 %, preferably 2.5 % to 9 % of the carbons of the main chain of the polymer type C are tertiary carbon atoms. By using such a kind of polymer as polymer type C a better flexibility of the coating can be achieved resulting in a smoother sealing. The ratio of tertiary carbon atoms in the main chain can be determined by the method giving in the example section.

It might also be advantageous if the polymer type A is a mixture of two polyesters and/or, preferably and, polymer type C is a mixture of two polyolefines.

The polymer type AB is preferably a graft copolymer with a polyester main chain and poly(meth)acrylate side chains.

Polymer type C is preferably an EPM, a hydrogenated polybutadiene, or a copolymer of ethylene and of an α-olefin having from 4 to 12, preferably 4 to 6 carbon atoms, most preferably polymer type C is an ethylene-butylene-copolymer.

The polymer type C preferably comprises a proportion of from 60 to 90%, preferably of from > 70 to 85 by weight of repeating ethylene units, and/or, preferably and its weight-average molecular weight $M_w$ is preferably of from 10 000 to 250 000 g/mol.

In order to produce the graft copolymers AB and CD, grafting of polymer type B onto polymer type A and of polymer type D onto polymer type C is carried out simultaneously. The polymer type B and D might have different compositions or have the same composition. Preferably polymer type B and polymer type D have the same composition.

**The polymer type A**

A person skilled in the art is in principle easily capable of selecting the polyesters of the polymer type A that are suitable for the coating composition of the invention. A very wide range of polyesters can be used here. Selection criteria available to the person skilled in the art are particularly the solubility of the polyester in the respective solvent and - for food-contact applications - the appropriate approval of said component under food legislation.

Materials that can preferably be used as polymer type A in the invention are on the one hand copolyesters which feature itaconic acid as monomer unit (polyester A1). Equal preference is on the other hand given according to the invention to the use of polyesters which are free from monomers comprising polymerizable double bonds and whose number-average molar mass ($M_n$) is preferably greater than 5000 g/mol (polyester A2), and which thus bring about the adhesion to the PET foil.

In a particularly preferred embodiment of the present invention, the polymer type A is a mixture of the polyester A1 with number-average molar mass $M_n$ from 700 to 5000 g/mol, preferably from 2000 to 4000 g/mol, produced with copolycondensation of itaconic acid, and of the polyester A2 with number-average molar mass $M_n$ from 5000 to 50 000 g/mol, preferably from 10 000 to 35 000 g/mol, which has no double bonds. The component of the polymer type AB preferably exclusively comprises polyester A1 as polymer type A.

This preferred coating system particularly comprises, based on the total mass of the polymer types A, B, C, AB, and CD, inclusive of the proportions of the polyester A1 in the polymer type AB, from 1 to 15% by weight, preferably from 5 to 12% by weight, very particularly preferably from 7 to 10% by weight, of the polyester A1 and from 10 to 50% by weight, preferably from 20 to 40% by weight, very particularly preferably from 25% by weight to 35% by weight, of the polyester A2.

As alternative to said particularly preferred embodiment, the coating system can also comprise other polymer types A which are entirely, or else only to some extent, a polyester which has been produced with co-polycondensation of itaconic acid and which particularly preferably has the same properties as those described above for the polyester A1.

It is preferable that the polyesters A1 have a linear or branched structure and are characterized by OH numbers of from 20 to 150 mg KOH/g, preferably from 25 to 50 mg KOH/g, acid numbers of less than 10 mg KOH/g, preferably less than 5 mg KOH/g, and particularly less than 2 mg KOH/g, and number-average molar mass from 700 to 5000 g/mol, preferably from 2000 to 4000 g/mol. Hydroxy number (OHN) is determined in accordance with DIN 53240-2. Acid number is determined in accordance with DIN EN ISO 2114. Molar mass is determined by means of gel permeation chromography (GPC). The samples were characterized in tetrahydrofuran eluent in accordance with DIN 55672-1.

The content of itaconic acid in the polyesters A1 can preferably be in the range of from 0.1 mol% to 20 mol%, more preferably from 1 mol% to 10 mol%, very particularly preferably from 2 mol% to 8 mol%, based on the total quantity of polycarboxylic acids used.

It is possible that aliphatic and/or cycloaliphatic and/or aromatic polycarboxylic acids are present. The expression "polycarboxylic acid" means compounds which preferably bear more than one, and particularly preferably two, carboxy groups.

Examples of aliphatic polycarboxylic acids having relatively short chains are succinic acid, glutaric acid, adipic acid, azelaic acid, sebacic acid, dodecanedioic acid, tetradecanedioic acid and octadecanedioic acid. Examples of cycloaliphatic polycarboxylic acids are the isomers of cyclohexanedicarboxylic acid. Examples of aromatic polycarboxylic acids are the isomers of benzenedicarboxylic acid and trimellitic acid. It is also optionally possible to use, instead of the free polycarboxylic acids, the esterifiable derivatives thereof, e.g. corresponding lower alkyl esters, or cyclic anhydrides.

As polyols aliphatic and/or cycloaliphatic, and/or aromatic polyols can be present. The expression "polyols" means compounds which preferably bear more than one, in particular preferably two, hydroxy groups.

Examples of polyols are ethylene glycol, 1,2-propanediol, 1,3-propanediol, 1,4-butanediol, 1,5-pentanediol, 1,6-hexanediol, 1,9-nonanediol, 1,12-dodecanediol, neopentyl glycol, butylethyl-1,3-propanediol, methyl-1,3-propanediol, methylpentanediols, cyclohexanedimethanols, trimethylolpropane, pentaerythritol, and mixtures thereof.

The expression "aromatic polyols" means reaction products of aromatic polyhydroxy compounds, for example hydroquinone, bisphenol A, bisphenol F, dihydroxynaphthalene, etc. with epoxides, for example ethylene oxide or propylene oxide. Polyols present can also be etherdiols, i.e. oligomers or polymers based by way of example on ethylene glycol, propylene glycol, or 1,4-butanediol. Particular preference is given to linear aliphatic glycols.

It is also possible to use lactones, alongside polyols and dicarboxylic acids, for the synthesis of the hydroxy polyesters.

The polyesters A1 of the invention can be produced by using traditional methods for (poly)condensation reactions.

Polyesters of type A1 can be purchased from Evonik Operations GmbH under the tradenames DYNACOLL® or DYNAPOL®, preferably under tradename DYNACOLL®. Most preferred product used as polyester A1 is DYNACOLL® EP 415.02.

The polyesters A2, equally preferred for the purposes of the invention, in particular have a linear, optionally slightly branched structure, and are preferably characterized by an OH number from 1 to 15 mg KOH/g, preferably from 5 to 10 mg KOH/g, an acid number less than 10 mg KOH/g, preferably less than 5 mg KOH/g, and particularly preferably less than 2 mg KOH/g, and preferably a number-average molar mass $M_n$ from 5000 to 50 000 g/mol, more preferably from 10 000 to 35 000 g/mol. The glass transition temperatures ($T_g$) of the polyesters A2 are moreover particularly advantageously in the range from 25 to 45°C, preferably from 30 to 35°C. Glass transition temperature is measured by using DSC (Differential Scanning Calorimetry) in accordance with DIN EN ISO 11357-1. The values stated are taken from a second heating cycle.

In the case of the materials of the polyester A2 type, it is preferably essential that no monomers are used which comprise double bonds capable of polymerization with (meth)acrylates; this means by way of example absence of itaconic acid. With this exception, the polyesters of type A2 can be based on the same polycarboxylic acids and polyols as given for polyesters of type A1.

Polyesters of type A2 can be purchased from Evonik Operations GmbH under the tradenames DYNACOLL® or DYNAPOL®, preferably under tradename DYNAPOL®. Most preferred product used as polyester A2 is DYNAPOL® L 323.

The polymer types B and D

The polymer type B is formed alongside the graft copolymer AB during the production of the dispersion of the invention. The description below also applies to the composition of the B chains in the product constituent AB: Polymer type and chain segment B are defined as being composed of polyacrylate sequences and/or polymethacrylate sequences. These are per se, e.g. in the form of a corresponding homo- or copolymer, soluble in the solvent system (L). The polymer B is generally composed of standard methacrylates and optionally acrylates. Polymer type B is preferably composed of MMA, butyl (meth)acrylate, ethyl (meth)acrylate, and/or propyl (meth)acrylate. The expression "(meth)acrylate" here means methacrylates, acrylates, or a mixture of methacrylates and acrylates. Other suitable monomers for the polymer type B can be found by way of example in EP 1 989 258, where the functional monomers likewise listed in that reference are restricted in the invention to OH functionalities, acid functionalities, and silyl functionalities.

It is particularly preferable that polymer type B is composed of more than 50% by weight, preferably from 80% by weight to 100% by weight, of MMA and/or butyl methacrylate.

There can be up to 20% by weight, preferably up to 10% by weight, and particularly preferably from 0 to 5% by weight, of functional monomers included in the polymer in order to provide an additional increase in heat-seal strength in relation to particular materials. These functional monomers can by way of example be acids, in particular acrylic acid, methacrylic acid, or itaconic acid. Somewhat less preference is given to monomers having an OH group, for example particularly 2-hydroxyethyl (meth)acrylate or 3-hydroxypropyl (meth)acrylate.

Polymer type B can moreover comprise regulators in order to establish the desired range of molecular weight. Preferably no regulators are present in polymer type B.

The particular proportion and composition of the polymer B is advantageously selected with regard to the desired technical function.

Component B can also particularly take the form of mixture of various poly(meth)acrylates, where only one of these various (meth)acrylate compositions forms the constituents B of the polymer component AB.

The structure of polymer type D, present as constituent of the polymer types CD, particularly as side chains grafted onto polymer type C, can be analogous with that of polymer type B. It is particularly preferable here that the compositions of the components B and D are identical. During the graft reaction of the monomers of the polymer type B onto polymer type C it is moreover possible that homopolymers are formed, i.e. poly(meth)acrylates that are not grafted. In the invention, these homopolymers are a constituent of the polymer type B, which can - as described - take the form of mixture of various poly(meth)acrylates.

The polymer type C

Polyolefins to be used in the invention, corresponding to polymer type C, are known per se. Preferably these polyolefins are selected from EPM, hydrogenated polybutadienes, or copolymers of ethylene and of an α-olefin having from 4 to 12 carbon atoms, in particular of ethylene and butene or/and octene, and/or hexene. More preferably the polyolefines are selected from ethylene-butylene-copolymers. The weight-average molecular weight $M_w$ of polymer type C is preferably of from 10 000 to 250 000, more preferably from 50 000 to 230 000.

EPM is the abbreviation for ethylene-propylene copolymers. Distribution here can be substantially random, but it is also advantageously possible to use sequential polymers having ethylene blocks. The ethylene: propylene monomer ratio can vary within certain limits, which can be set at about 95 mol-% for ethylene and about 95 mol-% for propylene, as upper limit. Examples of suitable EPMs are described by way of example in the laid-open German specifications DE-A 16 44 941, DE A 17 69 834, DE-A 1939 037, DE-A 19 63 039, and DE A 20 59 981. The EPDMs likewise described in those references are markedly less suitable in the invention, because these can increase the opacity of the coating.

Particular preference is given to components of the polymer type C which comprise a proportion of from 60 to 90%, preferably of from > 70 to 85 by weight of repeating ethylene units. Repeating units of this type are not restricted to those obtained directly by copolymerization of ethylene but can also arise via 1,4-linkage of a butadiene and subsequent hydrogenation of the resultant polybutadiene. It might be advantageous that from 1 % to 15 %, preferably 2.5 % to 9 % of the carbons of the main chain of the polymer type C are tertiary carbon atoms.

More preferably polymer type C comprises a proportion of from 60 to 90%, preferably of from > 70 to 85 by weight of repeating ethylene units, and its weight-average molecular weight $M_w$ is from 10 000 to 250 000.

Most preferably polymer type C comprises a proportion of from 60 to 90%, preferably of from > 70 to 85 by weight of repeating ethylene units, and from 1 % to 15 %, preferably 2.5 % to 9 % of the carbons of the main chain of the polymer type C are tertiary carbon atoms, and the weight-average molecular weight $M_w$ of polymer type C is from 10 000 to 250 000.

Polyolefins, especially ethylene-butylene-copolymers, that can be used as polymer type C can be purchased for example from Dow Plastics under the trade name ENGAGE, preferably the products ENGAGE 7447 or 7387 HM, or from Mitsui Chemicals Group under the tradename TAFMER, preferably the product TAFMER DF 640.

The polymer type AB

Production of the graft polymers AB

The process of the invention for the production of a graft copolymer AB features reaction of a suitable initiator described at a later stage below with graftable groups, in particular with double bonds of repeating itaconic acid units in the polymer of the type A, to form reactive centers for free-radical polymerization of (meth)acrylates. The expression "reactive centers" means polymer chains which comprise one or more initiator units for free-radical polymerization. These initiator units can be formed simultaneously or else at different times. It is thus also very possible that itaconic acid units are activated only after other free radicals formed at other itaconic acid units have been deactivated by termination reactions.

The graft polymer AB is generally produced by grafting on the component A, under reaction conditions suitable for this purpose, monomers that lead to the component B. Correspondingly, the polymer type AB is preferably a graft copolymer having a polyester main chain and a poly(meth)acrylate side chain.

By way of example, a solution of strength from 10 to 65% by weight, preferably from 30 to 45% by weight, of an itaconic-acid-containing polyester in a suitable solvent which is inert under polymerization conditions, and which normally has a boiling point above the process temperature is produced. Examples of solvents that can be used are acetic esters such as ethyl, propyl, or butyl acetate, aliphatic solvents such as isooctane, cycloaliphatic solvents such as cyclohexane, and carbonylic solvents such as butanone. Preferably ethyl acetate or cyclohexane, more preferably ethyl acetate is used as solvent. It might also be advantageous to use a mixture comprising or preferably consisting of ethyl acetate and cyclohexane.

The monomers that lead to the polymer type B are added to these polyester solutions, and polymerization is carried out with addition of one or more preferably peroxidic free-radical initiators preferably at temperatures of from -10°C to 100°C within a period that is preferably of from 4 to 8 hours. It is desirable, as far as possible, to achieve complete conversion. It is preferable to use, as free-radical initiator, azo compounds such as AIBN, or peresters such as tert-butyl per-octoate. The initiator concentration depends on the number of desired grafting sites, and on the desired molecular weight of the segment B. The initiator concentration is generally from 0.1 to 3% by weight, based on the polymer.

It is also possible to make concomitant use of chain-transfer agents in order to establish the desired molecular weight of the segments B. Examples of suitable chain-transfer agents are sulfur chain-transfer agents, in particular chain-transfer agents comprising mercapto groups, e.g. the chain-transfer agents described in the section relating to polymer type B. The concentrations of chain-transfer agents are generally from 0.1% by weight to 1.0% by weight, based on the entire polymer.

The graft copolymers of the polymer type AB can be synthesized not only by the solution polymerization method described but also in bulk. For this, the polyesters are dissolved in the (meth)acrylic monomer mixture before the free-radical polymerization is initiated.

Free-radical initiator can alternatively also be used as initial charge in a melt of the polyester, the monomer mixture then being admixed therewith.

The polymer type CD

Production of the graft polymers CD

The graft polymer CD is generally produced by - optionally with the aid of a suitable emulsifier - producing a dispersion of the component C and grafting onto this, under reaction conditions suitable for this purpose, monomers that lead to polymer type B and D, respectively. The processes for the production of suitable grafted polymers of the types CB and CD respectively are known per se: by way of example it is possible to proceed by the transfer grafting method: (cf. also Houben-Weyl, Methoden der Org. Chemie [Methods of organic chemistry], vol. 1411, p. 114, H.A.J. Battaerd, G.W. Tregear, Polymer Reviews, vol. 16, Interscience (1967)).

By way of example, a solution of strength from 10 to 50% by weight, preferably from 20 to 40% by weight, of a polyolefin of the polymer type C in a suitable solvent which is inert under polymerization conditions, and which normally has a boiling point above the process temperature is produced. Examples of solvents that can be used are butyl acetate, aliphatic, cycloaliphatic, and aromatic hydrocarbons, and also mixtures of these. The monomers in the desired ratios are added to these solutions, and polymerization is carried out with the addition of one or more preferably peroxidic free-radical initiators at temperatures of from 50°C to 120°C, usually within 4 to 8 hours. It is desirable, as far as possible, to achieve complete conversion. It is preferably to use peresters such as tert-butyl peroctoate. The initiator concentration depends on the number of desired grafting sites, and on the desired chain lengths of the segments D. The initiator concentration is generally from 0.2 to 3.0% by weight, based on the polymer.

It is also possible to make concomitant use of chain-transfer agents in order to establish the desired molecular weight of the segments D. Examples of suitable chain-transfer agents are sulfur chain-transfer agents, in particular chain-transfer agents comprising mercapto groups, e.g. the chain-transfer agents listed in the section relating to polymer type B. The concentrations of chain-transfer agents are generally from 0.1% by weight to 1.0% by weight, based on the entire polymer. Another method for the production of the graft polymers CD provides the hydroperoxidation of a polyolefin as first step. The hydroperoxide groups thus formed, located in the chain, can initiate graft polymerization of the vinyl monomers in a following stage. (cf. H.A.J. Battaerd, G.W. Tregear, Polymer Reviews loc. cit.).

It might be preferably if the grafting of polymer type B onto polymer type A and of polymer type D onto polymer type C takes place simultaneously, in order to produce the graft copolymers AB and CD. The (statistical) composition of the side chains B and D here is identical. In the invention the resultant homopolymers are counted with polymer type B.

Alternatively, it is also possible to blend the polymer types AB and CD, preference being given here to simultaneous synthesis, since the dispersion thus produced has greater stability. The problem of phase separation can be reduced when comparison is made with simple blending.

In a third alternative, the polymer type AB is synthesized in the presence of the already grafted polymer type CD, of the ungrafted (non-grafted) polymer type C, and of the polymer type B formed during the synthesis of polymer type CD. This procedure can lead to formation of additional side chains on polymer type CD and to formation of additional polymers CD. Indeed, it is thus possible that polymer type CD having side chains D of different composition is present.

It is also possible to synthesize the polymer type CD analogously, and with analogous effects, in the presence of the polymer types AB, A, and B.

The dispersion of the coating system of the invention can also comprise, alongside the polymer types A, B, AB, C and CD described, other components such as adhesion promoters, stabilizers, abrasion improvers, or antioxidants. Examples of these additional materials based on polymers are the polymer types E and $E_A$.

A formulation with polymer type E is an option for improving aluminum adhesion: improvement of Al adhesion can be observed as a result of priming the foil or of adding from 0.1 to 10% by weight, preferably from 0.1 to 5% by weight of an adhesion-improving terpolymer to the dispersion. An example of a product that can be used is VINYLITE ® VMCH (marketed by Union Carbide).

Polymer type $E_A$ can optionally be added in order to reduce possible abrasion during processing. By way of example, it is possible to use a polyamide, e.g. of the VESTOSINT ® 2159 (Evonik Operations GmbH) type. The proportion of polymer type $E_A$ in the dispersion is preferably from 0.1 to 10% by weight, preferably from 0.1 to 5% by weight, based on the total mass of the dispersion.

Other materials that can moreover be added to the heat-sealable coating system suitable for the sealing of various types of substrates are, as described, the auxiliaries and additives usually used for heat-sealing.

Another constituent of the present invention, alongside the coating composition described, is a process for the sealing of two materials with the aid of the coating composition of the invention.

**Production of the heat-sealing system**

Synthesis with the polymer types A - D

A dispersion or, given suitable polymer compatibility, a homogeneous solution of the components A and C in the solvent system (L) is produced, and monomers that lead to the component B (and D respectively) are simultaneously grafted under suitable reaction conditions onto the components A and C. The ratios by weight of the proportions of A and B are generally from 1:5 to 5:1. The ratio by weight of A to C is generally from 1:2 to 10:1, preferably from 1:1 to 5:1. The production of the dispersion or homogeneous solution might be supported by addition of a suitable emulsifier to the reaction mixture.

The total polymer content, based on the entire dispersion, is at least 10% by weight, desirable proportions in practical situations here being from 40% by weight to 80% by weight, normally from 45% by weight to 60% by weight.

The process of the invention gives, in dispersion, heat-sealable coating systems which have adequate stability for the processing method. The dispersions are stable for at least a plurality of days, normally a plurality of weeks to months.

The heat-sealable coating system according to the invention can be used for the sealing of various types of substrates and in different sealing processes.

In the process for sealing of various types of substrates according to the invention, a foil is coated with a heat-sealable coating system according to the invention, the coating is dried at a temperature of below 100 °C, preferably at a temperature of from 80 to 98 °C, and the coated side of the foil is placed onto the material to be sealed, made for example of polystyrene, polyester, PET or PVC, and is sealed at a temperature of from 120 to 220 °C, preferably of from 160 to 200°C and with a pressure of from 0.2 to 0.6 MPa over a period of from 0.1 to 1 s.

Preferably the foil or film and the material to be sealed, both coming in to contact with the coatings system, are made from the same kind of polymer, preferably polyesters, and more preferably polyethylene terephthalate (PET).

In another advantageous embodiment of the process according to the invention aluminum foils, polyester or PET foils or films or PET-coated foils are used as foils or films and substrates made from polystyrene, polyester, PET, or polyvinyl chloride are used as material to be sealed.

The drying of the coating might be achieved at subatmospheric pressure, preferably at a temperature above the highest boiling point of the components of the solvent system/liquid phase.

Even without further exposition it is believed that a person skilled in the art will be able to make the widest use of the above description. The preferred embodiments and examples are therefore to be understood merely as a descriptive disclosure which is not in any way intended to be limiting.

The present invention will now be described more particularly with reference to examples. The examples given below illustrate the present invention in more detail, without restricting the invention to the features disclosed therein. Alternative embodiments of the present invention are obtainable analogously.

**Examples:**

**Test methods:**

**Solid Content (SC) of the heat-sealable coating system:**

Solid content (SC) was determined in a drying oven by drying the heat-sealable coating system for 1 h at 105°C. The weight of the sample was measured before and after the drying the solid content in % by weight is calculated according to the following formula:

$$\text{(weight before drying} - \text{weight after drying)/weight before drying} * 100$$

**Dynamic viscosity:**

Dynamic viscosity was determined with a Brookfield LVDV-II+Pro viscosimeter at 23°C with spindle II at 6 rpm.

**Molecular weight:**

Molecular weight of the polymer was determined by gel permeation chromatography based on: DIN 55672-1 "Gel permeation chromatography, Part 1: Tetrahydrofuran as eluent'.

Columns:

PSS SDV precolumn, 5 $\mu$m, 5 cm, 8 mm
PSS SDV 103, 5 $\mu$m, 30 cm, 8 mm
PSS SDV 105, 5 $\mu$m, 30 cm, 8 mm
PSS SDV 106, 5 $\mu$m, 30 cm, 8 mm
PSS SDV 107, 5 $\mu$m, 30 cm, 8 mm
Manufacturer: PSS Polymer Standard-Service, Mainz

Eluent: tetrahydrofuran (THF), stabilized with 250 ppm BHT (2,6-di-tert.butyl-4-methylphenol) Flow: 1.0 mL/min
Oven temperature: 35 °C (air)
Sample solvent: tetrahydrofuran (THF), stabilized with 1000 ppm BHT (2,6-di-tert.-butyl-4-methylphenol), BHT serves as internal standard
Sample concentration: 2.5 g solids / l (weight 37.5 mg per 15 ml THF)
Dissolve while stirring at RT for at least 16 hours (overnight), filter via disposable filter M&N Chromafil organic type O-45/25
Injection volume: 100 $\mu$l
Detection: RI (refractive index)
Runtime: 35 min, with staggered injection 35 min
Calibration standards: Polystyrene

| PS Mp (g/mol) (Manufacturer: Aigilent ex Polymer Laboratories Ltd.) |
| --- |
| 6.0358.000 |
| 3.752.000 |
| 2.329.000 |
| 990.500 |
| 660.000 |
| 483.400 |
| 299.400 |
| 126.000 |
| 74.800 |
| 28.770 |
| 21.720 |
| 10.210 |
| 4.900 |
| 2.170 |
| 1.320 |

Polynom 3
Evaluation software: PSS WinGPC
Result: polystyrene or PMMA molecular weight equivalents.
PMMA molecular weight equivalents by universal calibration using the Mark-Houwink Constant for PS: a=0.714 / K=0.01363; for PMMA: a=0.688 / K=0.01298
Mw(PS or PMMA), Mn(PS or PMMA), Mp(PS or PMMA), Polydispersity D=Mw/Mn

**NMR spectroscopy:**

The samples were dissolved at 120 °C in tetrachloroethane-d2 (TCE) and 13C-NMR spectra included DEPT135 were measured.
Instrument: Bruker Avance 500 III HD, with cryogenic probe head
Software for evaluation: Bruker Topspin 3.5
The evaluation is based on suitable literature spectra:
NMR Spectra of Polymers and Polymer Additives, Anita J. Brandolini, Deborah D. Hills, Marcel Dekker Inc., New York, 2000

**Materials used:**

Foil material and pot material used:

> paper/aluminum/PET-film composite film (MIXPAP®, product of Amcor)
> paper/PET-film composite (Flexpap, product of Constantia),
> PET film, thickness 36 μm, untreated, transparent)
> Pot material used: polystyrene (PS) thermoforming film from Fernholz and amorphous polyethylene terephthalate (APET) pot films (purchased from Derschlag)
> AIPET (or know as AluPET) is a laminate made of aluminum foil and PET film (product of Fernholz) Trigonox® 141, 2,5-Dimethyl-2,5-di(2-ethylhexanoylperoxy) hexane initiator purchased from Nouryon.

Component A:

Table 1 lists the characteristics of the co-polyesters (type A1 and A2) used here as examples of the component A. The materials are semi-aromatic or linear co-polyesters with different itaconic acid contents, based on total quantity of poly-carboxylic acids.

Table 1: Characteristics of the polyesters used

| Polyester | Itaconic acid content | $T_g$ | $M_w$ |
|---|---|---|---|
| Type A1 | 3.0 mol% | 33°C | 15 800 |
| Type A2 | 0 mol% | 30°C | 40 900 |

DYNACOLL® EP 415.02 (Evonik Operations GmbH) was used as polyester of the type A1. DYNAPOL® L 323 (Evonik Operations GmbH) can be used as polyester of the type A2.

Component C:

The poly-olefine samples were dissolved in tetrachloroethane-d2 (TCE) at 120 °C and 13C NMR spectra including DEPT were measured. Both samples of ENGAGE 7447 and TAFMER DF 640 show a copolymer consisting of ethylene (C2) and butene-1 (C4). The proportions of C4 are the same, the ratio for both samples is: 83 mol% (71 wt.%) C2 and 17 mol% (29 wt.%) C4.
TAFMER DF 640 can be purchased from Mitsui Chemicals Group, and ENGAGE 7447 and ENGAGE HM 7387 can be purchased from DOW Plastics,

Component B and D:

Starting material for producing component B and D were methyl methacrylate and butyl methacrylate.

**Production of the heat-sealing coating systems**

**Inventive example 1**

39.3 g of TAFMER DF 640 and 64.2 g ENGAGE 7447 were used as initial charge in 140.0 g of ethyl acetate and 50.5 g of cyclohexane (CH) in a jacketed vessel with attached thermostat, reflux condenser, blade stirrer, and internal thermometer, and stirred at 75°C until the material had dissolved.
A mixture of 59.7 g of polyester of type A1 (solution in ethyl acetate) and 116.4 g polyester of type A2 and 140.0 g ethyl acetate was stirred for 2 hours at 75 °C. After these 2 hours 0.42 g of 2,5-Dimethyl-2,5-di(2-ethylhexanoylperoxy) hexane and 5.0 g ethyl acetate were added. After 10 minutes stirring at 75 °C, a mixture of 77.6 g of methyl methacrylate and 77.6 g of butyl methacrylate, with admixed 1.27 g of 2,5-Dimethyl-2,5-di(2-ethylhexanoylperoxy) hexane (Trigonox® 141), was metered into the system by means of a metering pump over a period of 1.5 h at 75°C. Once addition has ended and after 30 minutes, a further 0.34 g of Trigonox® 141 was added twice, with one hour between each addition, and the mixture was stirred for a further 4 h at 75 °C. The mixture was finally diluted with 120.0 g of ethyl acetate for viscosity adjustment.

**Inventive example 2**

39.3 g of TAFMER DF 640 and 64.2 g ENGAGE 7447 were used as initial charge in 140.0 g of ethyl acetate and 50.5 g of cyclohexane (CH) in a jacketed vessel with attached thermostat, reflux condenser, blade stirrer, and internal thermometer, and stirred at 75°C until the material had dissolved. A mixture of 59.7 g of polyester of type A1 (solution in ethyl acetate) and 116.4 g polyester of type A2 and 140.0 g ethyl acetate was stirred for 2 hours at 75 °C. After these 2 hours 0.52 g of t-butyl peroxy-2-ethylhexanoate and 5.0 g ethyl acetate were added. After 10 minutes stirring at 75 °C, a mixture of 77.6 g of methyl methacrylate and 77.6 g of butyl methacrylate, with admixed 1.56 g of t-butyl peroxy-2-ethylhexanoate was metered into the system by means of a metering pump over a period of 1.5 h at 75°C. Once addition has ended and after 30 minutes, a further 0.51 g of t-butyl peroxy-2-ethylhexanoate was added twice, with one hour between each addition, and the mixture was stirred for a further 4 h at 75 °C. The mixture was finally diluted with 120.0 g of ethyl acetate for viscosity adjustment.

**Inventive example 3**

39.3 g of TAFMER DF 640 and 64.2 g ENGAGE 7447 were used as initial charge in 140.0 g of ethyl acetate and 50.5 g of cyclohexane (CH) in a jacketed vessel with attached thermostat, reflux condenser, blade stirrer, and internal thermometer, and stirred at 75°C until the material had dissolved. A mixture of 59.7 g of polyester of type A1 (solution in ethyl acetate) and 116.4 g polyester of type A2 and 140.0 g ethyl acetate was stirred for 2 hours at 75 °C. After these 2 hours 0.78 g of t-butyl peroxy-2-ethylhexanoate and 5.0 g ethyl acetate were added. After 10 minutes stirring at 75 °C, a mixture of 77.6 g of methyl methacrylate and 77.6 g of butyl methacrylate, with admixed 2.33 g of tert butylperox-2-ethylhexanoate was metered into the system by means of a metering pump over a period of 1.5 h at 75°C. Once addition has ended and after 30 minutes, a further 0.62 g of t-butyl peroxy-2-ethylhexanoate is added twice, with one hour between each addition, and the mixture was stirred for a further 4 h at 75 °C. The mixture is finally diluted with 120.0 g of ethyl acetate for viscosity adjustment.

**Inventive example 4**

31.5 g of TAFMER DF 640 and 51.3 g ENGAGE 7447 were used as initial charge in 100.0 g of ethyl acetate and 48.0 g of cyclohexane (CH) in a pressure vessel with attached thermostat, blade stirrer, and internal thermometer, and stirred at 85°C until the material had dissolved.
A mixture of 47.8 g of polyester of type A1 (solution in ethyl acetate) and 93.1 g polyester of type A2 and 120.0 g ethyl acetate was stirred for 2 hours at 85 °C. After these 2 hours 0.31 g of t-butyl peroxy-2-ethylhexanoate and 5.0 g ethyl acetate were added. After 10 minutes stirring at 85 °C, a mixture of 62.1 g of methyl methacrylate and 62.1 g of butyl methacrylate, with admixed 0.93 g of t-butyl peroxy-2-ethylhexanoate was metered into the system by means of a metering pump over a period of 1.5 h at 85°C. Once addition has ended and after 30 minutes, a further 0.25 g of t-butyl peroxy-2-ethylhexanoate is added twice, with one hour between each addition, and the mixture is stirred for a further 5 h at 85 °C. The mixture is finally diluted with 100.0 g of ethyl acetate for viscosity adjustment.

**Inventive example 5**

31.5 g of TAFMER DF 640 and 51.3 g ENGAGE 7447 were used as initial charge in 100.0 g of ethyl acetate and 48.0 g of cyclohexane (CH) in a pressure vessel with attached thermostat, blade stirrer, and internal thermometer, and stirred at 95°C until the material had dissolved.
A mixture of 47.8 g of polyester of type A1 (solution in ethyl acetate) and 93.1 g polyester of type A2 and 120.0 g ethyl acetate was stirred for 2 hours at 95 °C. After these 2 hours 0.31 g of t-butyl peroxy-2-ethylhexanoate and 5.0 g ethyl acetate were added. After 10 minutes stirring at 95 °C, a mixture of 62.1 g of methyl methacrylate and 62.1 g of butyl methacrylate, with admixed 0.93 g of tert butylperox-2-ethylhexanoate was metered into the system by means of a metering pump over a period of 1.5 h at 95°C. Once addition has ended and after 30 minutes, a further 0.25 g of t-butyl peroxy-2-ethylhexanoate was added twice, with one hour between each addition, and the mixture was stirred for a further 5 h at 95 °C. The mixture was finally diluted with 100.0 g of ethyl acetate for viscosity adjustment.

**Inventive example 6**

31.5 g of TAFMER DF 640 and 51.3 g ENGAGE 7447 were used as initial charge in 100.0 g of ethyl acetate and 48.0 g of cyclohexane (CH) in a pressure vessel with attached thermostat, blade stirrer, and internal thermometer, and stirred at 98°C until the material had dissolved. A mixture of 47.8 g of polyester of type A1 (solution in ethyl acetate) and 93.1 g polyester of type A2 and 120.0 g ethyl acetate was stirred for 2 hours at 98 °C. After these 2 hours 0.31 g of t-butyl peroxy-2-ethylhexanoate and 5.0 g ethyl acetate were added.

After 10 minutes stirring at 98 °C, a mixture of 62.1 g of methyl methacrylate and 62.1 g of butyl methacrylate, with admixed 0.93 g t-butyl peroxy-2-ethylhexanoate was metered into the system by means of a metering pump over a period of 1.5 h at 98°C. Once addition has ended and after 30 minutes, a further 0.25 g of t-butyl peroxy-2-ethylhexanoate was added twice, with one hour between each addition, and the mixture is stirred for a further 5 h at 98 °C. The mixture is finally diluted with 100.0 g of ethyl acetate for viscosity adjustment.

**Inventive example 7**

31.5 g of ENGAGE HM 7387 and 51.3 g ENGAGE 7447 were used as initial charge in 100.0 g of ethyl acetate and 48.0 g of cyclohexane (CH) in a pressure vessel with attached thermostat, blade stirrer, and internal thermometer, and stirred at 85°C until the material had dissolved. A mixture of 47.8 g of polyester of type A1 (solution in ethyl acetate) and 93.1 g polyester of type A2 and 120.0 g ethyl acetate was stirred for 2 hours at 85 °C. After these 2 hours 0.31 g of t-butyl peroxy-2-ethylhexanoate and 5.0 g ethyl acetate were added. After 10 minutes stirring at 85 °C, a mixture of 62.1 g of methyl methacrylate and 62.1 g of butyl methacrylate, with admixed 0.93 g of tert butylperox-2-ethylhexanoate was metered into the system by means of a metering pump over a period of 1.5 h at 85°C. Once addition has ended and after 30 minutes, a further 0.25 g of t-butyl peroxy-2-ethylhexanoate was added twice, with one hour between each addition, and the mixture is stirred for a further 5 h at 85 °C. The mixture was finally diluted with 100.0 g of ethyl acetate for viscosity adjustment.

**Experimental results**

Some properties of the binders obtained in inventive examples 1 to 7 can be found in table 2 below.

Table 2: properties of the binder

| Example | SC [%] | dyn. visc. [mPas] | res. mon. [%] | appearance |
|---------|--------|-------------------|---------------|------------|
| 1 | 46,1 | 2800 | 1,3 | white, disperse |
| 2 | 46,5 | 1600 | 1,1 | white, disperse |
| 3 | 45,9 | 2900 | 0,8 | white, disperse |
| 4 | 45,8 | 3000 | 0,8 | white, disperse |
| 5 | 46,1 | 1300 | 1,1 | white, disperse |
| 6 | 47,1 | 1800 | 1,1 | white, disperse |
| 7 | 44,7 | 2100 | 1,1 | white, disperse |
| SC: solid content in % by weight<br>dyn. visc.: dynamic viscosity in mPas<br>res. mon.: residual monomer content in % by weight | | | | |

All the inventive examples exhibit solids-viscosity ratios that ensure processability for users and meet the requirement to achieve the highest possible solid contents.

**Laboratory application of the heat-sealing coating systems**

The heat-sealing coating systems obtained in inventive examples 1 to 7 were tested by applying the coating systems by drawing on a K hand coater No. 3 onto a MIXPAP® foil and a AIPET foil respectively. Dry layer having a thickness of from 4 to 7 $\mu$m were thus obtained.

**Laboratory drying of the coated foils**

After a short period of air-drying (from 5 to 10 minutes), the foils were dried in a convection oven at from 80°C to 100°C for 15 seconds.

**Heat-sealing and determination of seal seam strength**

Heat-sealing equipment (HSG/ET) from Brugger was used to carry out the sealing processes.

Sealing conditions:

| | |
|---|---|
| Temperature: | 180°C |
| Pressure: | 0.3 MPa |
| Time: | 0.5 sec. |
| Sealing area: | 100 x 10 mm |

Seal seam strength was determined by cutting samples into strips of width 15 mm and using a tensile tester from ZwickRoell, model zwickiLine Z0.5TN material testing machine (with an Xforce HP force transducer box, nominal force 100N) to subject same to tension at velocity 100 mm/min.

Care was taken that during the peel test the angle between the foil parts already separated and the as yet unstressed remainder were 90° and additional 180°.

The results are given in table 3 and 4 below.

Table 3: Heat-sealing properties

| Example | Material lid | Material cup | HSS [N/15mm] | Appearance of seal | 48h storage in water | Appearance of seal |
|---|---|---|---|---|---|---|
| 1 | MIXPAP® | PS | 9,9 | relatively uniform peel | N/A | N/A |
| | AIPET | APET | 7,9 | relatively uniform peel | 8,1 | relatively uniform peel |
| 2 | MIXPAP® | PS | 5,2 | nonuniform | N/A | N/A |
| | AIPET | APET | 3,7 | relatively uniform peel | 3,4 | relatively uniform peel |
| 3 | MIXPAP® | PS | 6,7 | relatively uniform peel | N/A | N/A |
| | AIPET | APET | 5,6 | relatively uniform peel | 5,8 | relatively uniform peel |
| 4 | MIXPAP® | PS | 6,8 | relatively uniform peel | N/A | N/A |
| | AIPET | APET | 6,3 | relatively uniform peel | 5,8 | relatively uniform peel |
| 5 | MIXPAP® | PS | 8,1 | relatively uniform peel | N/A | N/A |
| | AIPET | APET | 8,3 | relatively uniform peel | 7,5 | relatively uniform peel |
| 6 | MIXPAP® | PS | 9,3 | relatively uniform peel | N/A | N/A |
| | AIPET | APET | 8,5 | relatively uniform peel | 5,7 | relatively uniform peel |
| 7 | MIXPAP® | PS | 6,7 | relatively uniform peel | N/A | N/A |
| | AIPET | APET | 5,7 | relatively uniform peel | 2,1 | uniform peel |

Table 4: Heat-seal seam strength of inventive example 6, sealed at different seal conditions.

| Example | layer thickness | seal condition [0.3 MPa, 0.5 s] | Lid | Cup | HSS N/15mm Lab [180° angle] | |
|---|---|---|---|---|---|---|
| | | | | | HSS | appearance of seal |
| 6 | ~5 gsm | 120 °C | MIXPAP® | PS | 2,7 | relatively uniform peel |
| | | 140 °C | | | 4,9 | relatively uniform peel |
| | | 160 °c | | | 5,2 | relatively uniform peel |
| | | 180 °C | | | 5,6 | relatively uniform peel |
| | | 200 °C | | | 7,7 | relatively uniform peel |
| 6 | ~5 gsm | 140 °C | MIXPAP® | APET | 3,2 | relatively uniform peel |
| | | 160 °c | | | 4,4 | relatively uniform peel |
| | | 180 °C | | | 4,5 | Nonuniform |
| | | 200 °C | | | 5,2 | Nonuniform |

**Claims**

1. A heat-sealable coating system suitable for the sealing of various types of substrates, comprising a film-forming dispersion, comprising

    a polyester or polyester mixture as polymer type A,
    a poly(meth)acrylate as polymer type B,
    a graft copolymer of polymer type A and polymer type B as polymer type AB,
    a polyolefin or a polyolefin mixture as polymer type C, and
    a graft copolymer as polymer type CD, composed of polymer type C and of a poly(meth)acrylate as polymer type D,
    **characterized in that** said dispersion comprises of from 30 % to 60 % by weight of ethyl acetate.

2. The coating system as claimed in claim 1, **characterized in that** said dispersion comprises of from 50 % to 55 % by weight of ethyl acetate.

3. The coating system as claimed in claim 1 or 2, **characterized in that** said dispersion comprises of from 0.5 % to 10% by weight, preferably of from 5 % to 7.5 % by weight of cyclohexane.

4. The coating system as claimed in at least one of claims 1 to 3, **characterized in that** said dispersion comprises of from 20% to 50% by weight, preferably 25 % to 40 % by weight of polymer type A,

    from 10% to 20% by weight, preferably 10 % to 15 % by weight of polymer type B,
    from 10% to 20% by weight of polymer type AB,
    from 5% to 25% by weight, preferably 10 % to 15 % by weight of polymer type C, and
    from 15 to 35% by weight, preferably 20 % to 30 % by weight of polymer type CD,
    based in each case on the total mass of the polymer types A, B, C, AB, and CD.

5. The coating system as claimed in at least one of claims 1 to 4,
    **characterized in that** the proportion of the polymer type C, inclusive of the proportions in polymer type CD, based on the total mass of the polymer types A, B, C, AB, and CD, is from 5 to 40% by weight, preferably of from 10 to 20 % be weight.

6. The coating system as claimed in at least one of claims 1 to 5,
    **characterized in that** from 1 % to 15 %, preferably 2.5 % to 9 % of the carbons of the main chain of the polymer type C are tertiary carbon atoms.

7. The coating system as claimed in at least one of claims 1 to 6, **characterized in that** the polymer type A is a mixture of a two polyesters and polymer type C is a mixture of two polyolefines.

8. The coating system as claimed in at least one of claims 1 to 7, **characterized in that** the polymer type AB is a graft copolymer with a polyester main chain and poly(meth)acrylate side chains.

9. The coating system as claimed in at least one of claims 1 to 8, **characterized in that** polymer type C is an EPM, a hydrogenated polybutadiene, or a copolymer of ethylene and of an $\alpha$-olefin having from 4 to 12, preferably 4 to 6 carbon atoms.

10. The coating system as claimed in at least one of claims 1 to 9, **characterized in that** polymer type C comprises a proportion of from 60 to 90%, preferably of from > 70 to 85 by weight of repeating ethylene units, and its weight-average molecular weight $M_w$ is from 10 000 to 250 000.

11. The coating system as claimed in at least one of claims 1 to 10, **characterized in that** in order to produce the graft copolymers AB and CD, grafting of polymer type B onto polymer type A and of polymer type D onto polymer type C is carried out simultaneously, and that polymer type B and polymer type D preferably have the same composition.

12. A process for the sealing of various types of substrates, **characterized in that** a foil is coated with a coating system as claimed in any of claims 1 to 11, the coating is dried at a temperature of below 100 °C, preferably at a temperature of from 80 to 98 °C, and the coated side of the foil is placed onto the material to be sealed, and is sealed at a temperature of from 120 to 220°C and with a pressure of from 0.2 to 0.6 MPa over a period of from 0.1 to 1 s.

13. A process according to claim 12, **characterized in that** the foil and the material to be sealed, both coming in to contact with the coatings system, are made from the same kind of polymer, preferably polyethylene terephthalate.

14. A process according to claim 12, **characterized in that** aluminum foils, polyester foils, PET foils, or PET-coated foils are used as foils and substrates made from polystyrene, polyester, PET, or polyvinyl chloride are used as material to be sealed.

Europäisches
Patentamt

European
Patent Office

Office européen
des brevets

## EUROPEAN SEARCH REPORT

**Application Number**

**EP 23 15 3587**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/260433 A1 (HENNIG ANDRÉ [DE] ET AL) 14 September 2017 (2017-09-14) * the whole document * | 1-14 | INV.<br>C09D7/20<br>C09D135/02 |
| A | US 2017/335141 A1 (HENNIG ANDRÉ [DE] ET AL) 23 November 2017 (2017-11-23) | 1-14 | |

**TECHNICAL FIELDS SEARCHED (IPC)**

C09D

The present search report has been drawn up for all claims

| Place of search | Date of completion of the search | Examiner |
|---|---|---|
| Munich | 11 May 2023 | Rouault, Yannick |

## ANNEX TO THE EUROPEAN SEARCH REPORT
## ON EUROPEAN PATENT APPLICATION NO.

**EP 23 15 3587**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-05-2023**

| Patent document cited in search report | | | Publication date | Patent family member(s) | | | Publication date |
|---|---|---|---|---|---|---|---|
| US 2017260433 | A1 | | 14-09-2017 | BR | 112016025479 | A2 | 19-06-2018 |
| | | | | CA | 2947788 | A1 | 12-11-2015 |
| | | | | CN | 106536581 | A | 22-03-2017 |
| | | | | DE | 102014208608 | A1 | 12-11-2015 |
| | | | | DK | 3140360 | T3 | 26-09-2022 |
| | | | | EP | 3140360 | A1 | 15-03-2017 |
| | | | | ES | 2924810 | T3 | 11-10-2022 |
| | | | | HR | P20221161 | T1 | 09-12-2022 |
| | | | | HU | E059901 | T2 | 28-01-2023 |
| | | | | JP | 6615183 | B2 | 04-12-2019 |
| | | | | JP | 2017520669 | A | 27-07-2017 |
| | | | | PL | 3140360 | T3 | 05-09-2022 |
| | | | | PT | 3140360 | T | 17-08-2022 |
| | | | | SI | 3140360 | T1 | 28-10-2022 |
| | | | | US | 2017260433 | A1 | 14-09-2017 |
| | | | | WO | 2015169897 | A1 | 12-11-2015 |
| US 2017335141 | A1 | | 23-11-2017 | BR | 102017010356 | A2 | 19-02-2019 |
| | | | | CA | 2967493 | A1 | 17-11-2017 |
| | | | | CN | 107384145 | A | 24-11-2017 |
| | | | | EP | 3246370 | A1 | 22-11-2017 |
| | | | | ES | 2747759 | T3 | 11-03-2020 |
| | | | | HK | 1247228 | A1 | 21-09-2018 |
| | | | | JP | 6767923 | B2 | 14-10-2020 |
| | | | | JP | 2017206694 | A | 24-11-2017 |
| | | | | KR | 20170129621 | A | 27-11-2017 |
| | | | | PL | 3246370 | T3 | 28-02-2020 |
| | | | | RU | 2017117050 | A | 19-11-2018 |
| | | | | US | 2017335141 | A1 | 23-11-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3531036 A
- EP 0406681 A
- DE 3531036
- EP 1366128 B1
- EP 1891174 B1
- EP 1989258 B1
- EP 3140360 B1
- EP 3246370 B1
- EP 1989258 A
- DE 1644941 A
- DE 1769834 A
- DE 1939037 A
- DE 1963039 A
- DE 2059981 A

**Non-patent literature cited in the description**

- **HOUBEN-WEYL.** *Methoden der Org. Chemie [Methods of organic chemistry,* vol. 1411, 114
- **H.A.J. BATTAERD ; G.W. TREGEAR.** Polymer Reviews. Interscience, 1967, vol. 16
- **H.A.J. BATTAERD ; G.W. TREGEAR.** *Polymer Reviews*
- **ANITA J. BRANDOLINI ; DEBORAH D. HILLS.** Polymers and Polymer Additives. Marcel Dekker Inc, 2000